# EUROPEAN PATENT SPECIFICATION

(11) **EP 0 960 873 B1**
(45) Date of publication and mention of the grant of the patent: **10.03.2004**
(21) Application number: 98830327.7
(22) Date of filing: 27.05.1998
(51) Int. Cl.: C04B 41/89

(54) **A process for decorating ceramic tiles**
Verfahren zur Dekoration von keramischen Fliesen
Procédé de décoration de carreaux céramiques

(43) Date of publication of application: 01.12.1999
(60) Divisional application: 02015182.5
(73) Proprietor: Smaltochimica S.r.l., 41040 Spezzano di Fiorano Modenese (MO) (IT)
(72) Inventor: Tognetti, Mauro, 41053 Maranello (MO) (IT); Piccinini, Ivano, 41049 Sassuolo (MO) (IT); Burgoni, Maurizio, 41053 Pozza di Maranello (MO) (IT)
(74) Representative: Gotra, Stefano

(56) References cited:
- EP-A- 0 166 184
- DE-A- 3 418 193
- GB-A- 2 286 604
- US-A- 4 387 195
- PATENT ABSTRACTS OF JAPAN vol. 096, no. 010, 31 October 1996 & JP 08 165181 A (INAX CORP;TAISEI CORP), 25 June 1996

## Description

The prior art teaches printing processes for reproducing images on ceramic tiles, which processes include silk screening, direct printing, rotogravure, etc. according to which a layer of colorant powders is distributed on the glazed upper surface of the tile itself. Known inks for ceramic decoration are generally composed of a solid phase, constituted by vitreous colorant powders, and a relatively viscous and colourless liquid phase without inorganic substances such as, in particular, metals and oxides.

The powder is the substance which, due to the effect of the firing process, vitrifies the glaze, creating an image on the tile composed of one or more colours corresponding to the zones thereof on which it is applied.

The liquid phase essentially functions as a vehicle for the transport of the vitreous powders during the printing process. The liquid phase generally comprises a mixture of water and at least one other wetting organic component (for example a glycol) which favours the dispersion of the powders throughout the liquid and improves compound stability.

The present invention, through for example a simple silk-screening application (roller or direct), makes possible a contemporaneous realization on a glazed tile surface of both a design and a coloration of all or nearly all the glazed surface. In another known process for decorating vitrified stoneware tiles, a colorant liquid product is distributed over the unglazed upper surface of a vitrified stoneware tile base. The colorant is generally constituted by a solution thickened with chromophore metal-organic salts. This known process is based on the absorption and the penetration of the colorant product into the mass of the ceramic tile base, which is then fired and sanded.

The present invention makes available a process for realizing aethetically-pleasing decorations on ceramic tiles which can provide interesting and innovative ornamental effects with respect to the prior art. An advantage of the present invention is that it provides a relatively simple and economical process.

These aims and advantages and more besides are all attaineed by the present invention as it is characterised in the appended claims.

Further characteristics and advantages of the present invention will better emerge from the detailed description that follows of a preferred but non-exclusive embodiment of the invention.

There follows a description of a process for use of the product of the invention for the decoration of a slab-shaped ceramic base. The ceramic base can be of any type, such as for example a tile obtained from double-firing or single-firing, a vitreous stoneware tile or a monoporous tile, etc.

The process comprises the following phases:
1) the forming on an upper glazed and non-vitrified surface of a tile of a waterproof or semi-waterproof surface, by means of the application of a continuous and insulating layer of an appropriate material, either waterproof or semi-waterproof;
2) the application on the waterproof or semi-waterproof surface, and in predetermined zones thereof, and with the intention of forming a decoration thereon, of a further layer of a mixture comprising at least chromophore salts suspended in a liquid medium;
3) wetting the decoration with a determined quantity of liquid, in order to cause displacements on the upper surface of the tile of the chromophore salts contained in the decoration itself;
4) drying and firing the product thus obtained.

There follows a detailed description of the realization of monoporous tiles following the process of the present invention.

Before applying the waterproof layer, as described in phase number 1) above, a first layer of glaze is distributed over the upper surface of the tile in order to lay an undercoat. A further application of glossy transparent glaze is then applied.

The glazed surface thus obtained can be decorated with one or more silk-screen applications, using known-type inks composed of colorant powders and a traditional medium.

Subsequently phase 1) is carried out, in which an aerograph is used to spray a waterproof insulating layer so as to obtain a continuous and uniform cover.

This covering coat can be composed of a vinyl-based material (for example CERASOL P25 diluted with water at a 1:3 ratio), a silicone-based material (for example DS 22 diluted from 1:1 to 1:3), or another type. It is preferable to form a coat constituted by a slim and continuous film covering the whole upper surface of the tile base. Purely by way of illustration, for each 20x25 cm. tile three or four grams of waterproofing can be used.

The insulating layer, whether waterproof or semi-waterproof, can be realised by means of the application of a glaze having a waterproofing additive.

In phase 2), a decoration is realized on the waterproof coating, the decoration being realized using a mixture composed of a liquid colorant product and ceramic powders. The liquid colorant is preferably the product which will be described herein below. The ceramic powders are generally vitreous with the addition of colorant oxides. The preparation of the colorant mixture includes phases of homogenizing and refining, using known methodologies.

The decoration can be applied using known printing processes, such as for example silk-screening, direct printing, rotogravure, and so on.

In this phase the waterproof coat has the function of insulating the underlying material - comprising in this case the glazed surface distributed before phase 1) - against the decoration, at least until firing.

In phase 2) several decorations can be applied in succession on the tile base, side by side or even in overlap, which would require use of suitable drying processes.

In phase 3) a liquid is sprayed on to the decorated surface of the tile, so as to wet the decoration. The liquid can be, for example, water or a mixture of water and CMC, starches, glycols and surface-active agents.

The liquid distributed on the tile under process wets the previously-applied decoration, causing movement of a part of the decoration itself. In other words, the liquid causes a sort of "bleeding" of the decoration deposited on the waterproofing coat, and takes along with it (at least partially) the chromophore salts contained in the liquid medium part of the decoration.

The chromophore salts, by effect of the bleeding action of the sprayed liquid, are distanced from the original deposit zone and are thus spread more or less randomly over the glazed surface of the tile. The quantity of wetting liquid applied on the tile can be, for example, between three and five grams for each 20x25 gram tile.

Following phase 3) and before phase 4) there can be an intermediate phase in which air is blown on to the upper surface of the tile. The blown air removes the excess liquid previously sprayed but still lying on the tile surface. This operation contributes to further bleeding of the chromophore salts over the surface of the tile and thus a further spreading of the colours.

In phase 4), the tile is dried in a dry kiln and then fired, according to known methodologies.

The drying operation eliminates the humidity present on the glazed surface and halts any movement of the salts. In phase 4), the chromophore salts are fixed in the position reached by effect of the previous washing and blowing actions. The decorated surface is conspicuously modified due to the effect of the above-described colour-bleeding phenomenon, which is caused mainly by the movement of the chromophore salts from the zone where the decoration was initially applied to the surrounding zones. The decoration which emerges following washing and blowing, and subsequent firing, is characterised by haloes, mottling and chiaroscuro zones.

In substance, the solution of colorant salts, which has been dispersed by effect of the wetting and blowing of the glazed surface of the tile, determines a sort of watercolour-type effect, particularly aesthetically pleasing.

In obtaining this effect, an important role is played by the waterproofed or semi-waterproofed surface of the tile, done before depositing the decoration comprising the chromophore salts. In fact, during phase 3), the "washing" and "bleeding" phase, the colorant salts present in the decoration composition can easily migrate and diffuse over the surface of the tile.

Another advantageous obtainable result with the process consists in the perspective effect of depth in the decoration, given by the overlapping of the top decoration on the underlying decoration, if present.

There follows a description of a colorant liquid, containing chromophore salts, suitable for use in the present invention. The liquid product is especially suitable for use with the above-described process.

The colorant liquid of the invention can be mixed with vitreous ceramic powders to obtain a mixture destined to be deposited on a ceramic base, generally using known printing methodologies, so as to produce a coloured decoration.

An important characteristic of the produce is that it can act both as a liquid medium in the preparation of inks for printing on ceramic tiles, or as a chromophore agent for modifying the coloration of the surfaces it comes into contact with.

In another use process, the product can be applied directly, that is, without any preliminary mixing with ceramic powders, on the tile surface, obtaining particularly attractive ornamental effects.

In other words, decorative images can be obtained on the ceramic base even by depositing the colorant itself on the support, without previously mixing it with ceramic powders.

In such a case it is preferable to choose a composition of the colorant by virtue of which the product is more fluid and less viscous with respect to the above-described case. The product might then be spray-applied, for example.

A further possible use of the liquid product of the invention would be to add to it a determined quantity of thickener (for example, the same substance as in phase e) below), to form a paste having certain consistency. This paste would then be used to make decorations on a ceramic base.

The paste is deposited on the upper surface of the support using known-type means. These means can comprise, according to the printing process used, a silk screen or an engravure roller, or another device.

In both the above cases, where the product is used alone and where the product is used with a thickening agent added, before applying the decoration, a bottom coat of glaze is distributed on the upper surface of the tile base, on which a continuous and waterproof coating is then applied, with the aim of forming a waterproof surface able to prevent (or in at least to obstruct) penetration and absorption of the chromophore salts into the body of the tile.

The decoration is deposited on the waterproofed surface and then wetted and then, if so desired, blown, as described in the foregoing.

There now follows a description of an example of the liquid product suitable for use in the invention, which comprises a mixture of the following substances:
a) An organic wetting substance, of known type, preferably comprising a glycol derivative, chosen for example from a glycol, polyglycol and glycerine, or a mixture thereof. This substance is present in the product in a percentage weight of not less than 5%. It is however preferable that the percentage content of this substance does not exceed 50%. Substance a) favours the dispersion of the ceramic powders during the liquid medium of the mixture used for printing the decoration.
b. An aqueous solution of one or more metal-organic or inorganic salts, with chromophore action, present in the product in a percentage weight of not less than 5%. It is however preferable that the percentage content of this substance does not exceed 60%. The above-mentioned percentages refer to a saturated aqueous solution of the chromophore salts.
c. A solvent, present in the product in a percentage weight of not less that 20% and not more than 90%. The solvent is preferably constituted by water, with an eventual addition of a substance (for example alcohol or ethyl glycol able to accelerate drying and evaporation.
d. A lubricating substance, preferably a water-soluble synthetic resin, the content of which, expressed in percentage weight, is comprised between 0.2 and 5%. The percentages relate to the dry substance, not diluted in water. The lubricating substance has the task of improving paste flowability, which improves its passage through a silk screen, for example.
e. A thickening and suspending agent, preferably a water-soluble synthetic resin, whose content in percentage weight is comprised between 0.1 and 5%.
   The percentages relate to the substance in the dry state. The substance can be constituted, for example, by a water-soluble organic resin having a high molecular weight. It would however be possible to use either an organic or an inorganic compound. The thickening and suspending agent serves in particular to obtain a correct cohesion degree between the liquid medium (that is, the colorant product) and the solids (that is, the ceramic powders). The thickening and suspending agent also enables a considerable reduction in the risk of separation and/or decantation of the ceramic powders contained in the mixture.
f. A fixing substance, preferably a water-soluble synthetic resin, whose content, expressed in terms of percentage weight, is comprised between 0.1 and 5%. The percentages relate to the substance in the dry state. The fixing substance is added to the product, especially when more than one decoration is to be made. The fixing substance is particularly useful for fixing the applied decoration and for preventing any damage thereto.
g. A substance able to perform a liquid retention action, that is, to hold and gradually release a liquid. This substance preferably comprises a synthetic resin, the content of which, in percentage weight, is comprised between 0.1 and 5%. The percentages relate to the substance in the dry state. This substance serves in particular to regulate the release of chromophore salts during the above-mentioned phase 3) of wetting or washing the decoration.

There follows an example of formulation (expressed in percentage weight).

| | | |
|---|---|---|
| a. | glycol derivative = DIETHYLENE GLYCOL | 30 |
| b. | saturated aqueous solution of chromophore salts | 30 |
| c. | solvent = WATER | 35 |
| d. | lubricating substance = NATROSOL 250 HR | 1 |
| e. | thickening substance = METHOCEL J 20 | 0.2 |
| f. | fixing substance = TYLOSE C 30 | 0.8 |
| g. | retaining substance = COATEX RT 2 | 3 |

There follows a description of a preferred process for the preparation of the colorant of the invention.

At first the solvent (water) is introduced into a blade mixer. Then the various synthetic resins are added, keeping the blades moving. Preferably the resin having least thickening action is added first, then, in an ordered sequence, the resins in order of thickening action.

When the various resins have been completely dissolved (after about two hours but possibly longer), the wetting agent (i.e. the substance described in point a.) is added and mixing continues up until the mixture has assumed a homogeneous and treacly consistency.

Finally the chromophore solution is introduced (that is, the substance in point b.); this operation must be done slowly, with the blades still turning, up until the complex of colorant salts has perfectly amalgamated with the resin mixture.

## Claims

1. A process for decorating ceramic tiles, **characterised in that** it comprises the following phases:
forming, on an upper glazed and non-vitrified surface of a tile base, a waterproof or semi-waterproof surface;
applying on the waterproof or semi-waterproof surface, and in predetermined zones thereof, a product comprising chromophore salts suspended in a solvent;
at least partially wetting the product with a liquid, in order to cause displacements on the waterproofed or semi-waterproofed surface of the tile of the chromophore salts contained in the product;
drying and firing the tile.

2. The process of claim 1, **characterised in that** said waterproof or semiwaterproof surface is formed on a layer of vitrifiable material.

3. The process of claims 1 or 2, **characterised in that** said tile base, on which said waterproof or semi-waterproof coat is formed, is made of a non-vitrified material.

4. The process of any one of the preceding claims, **characterised in that** after the wetting phase and before the drying phase, air is blown over the upper surface of the tile base.

5. The process of any one of the preceding claims, **characterised in that** said product at least partially comprises a liquid colorant containing at least the following substances, mixed together:
at least 5% in weight of a saturated aqueous solution of
at least one salt, either inorganic or metal-organic, having a chromophore action;
at least 5% in weight of a substance of known type having a wetting action;
at least 20% in weight, and up to 100%, of a liquid solvent.

6. The process of any one of the preceding claims, **characterised in that** said product comprising chromophore salts suspended in a solvent contains ceramic powders.

## Patentansprüche

1. Verfahren zur Dekoration von keramischen Fliesen, **dadurch gekennzeichnet, dass** es die folgenden Phasen enthält:
- Formen einer wasserdichten oder halb-wasserdichten Oberfläche auf einer oberen glasierten und nicht verglasten Fläche einer Fliesenbasis von;
- Aufbringen auf der wasserdichten oder halb-wasserdichten Oberfläche und in bestimmten Bereichen derselben eines Produktes, enthaltend in einer Lösung schwebende farbgebende Salze;
- wenigstens teilweises Befeuchten des Erzeugnisses mit einer Flüssigkeit, um das Verschieben der in dem Produkt enthaltenen farbgebenden Salze auf der wasserdichten oder halb-wasserdichten Oberfläche zu bewirken;
- Trocknen und Brennen der Fliese.

2. Verfahren nach Patentanspruch 1, **dadurch gekennzeichnet, dass** die genannte wasserdichte oder halb-wasserdichte Oberfläche aus einer Schicht von zu verglasendem Material gebildet ist.

3. Verfahren nach Patentanspruch 1 oder 2, **dadurch gekennzeichnet, dass** die genannte Fliesenbasis, auf welcher die genannte wasserdichte oder halb-wasserdichte Schicht gebildet wird, aus einem nicht verglasten Material hergestellt ist.

4. Verfahren nach einem beliebigen der vorstehenden Patentansprüche, **dadurch gekennzeichnet, dass** nach der Befeuchtungsphase und vor der Trockenphase Luft auf die obere Oberfläche der Fliesenbasis geblasen wird.

5. Verfahren nach einem beliebigen der vorstehenden Patentanspüche, **dadurch gekennzeichnet, dass** das genannte Produkt wenigstens zum Teil eine flüssige Farbe enthält, in welchem wenigstens die folgenden vermischten Substanzen enthalten sind:
- wenigstens 5% Gewichtsanteil einer gesättigten wässrigen Lösung aus wenigstens einem Salz, entweder anorganisch oder metallorganisch, das eine farbgebende Wirkung hat;
- wenigstens 5% Gewichtsanteil einer Substanz von bekanntem Typ, die eine befeuchtende Wirkung hat;
- wenigstens 20% Gewichtsanteil, und bis zum Erreichen von 100%, eines flüssigen Lösungsmittels.

6. Verfahren nach einem beliebigen der vorstehenden Patentansprüche, **dadurch gekennzeichnet, dass** das farbgebende Salze enthaltende und in einer Lösung schwebende Produkt Keramikpulver enthält.

## Revendications

1. Procédé de décoration de carreaux céramiques, **caractérisé en ce qu'**il comprend les phases suivantes:
- formation, sur une surface supérieure émaillée e non vitrifiée d'une base de carreau, d'une surface imperméable ou semi-imperméable;
- application sur la surface imperméable ou semi-imperméable, et dans certaines de ses zones prédéterminées, d'un produit comprenant des sels chromophores suspendus dans un solvant;
- mouillage, au moins partiel, du produit avec un liquide, de manière à causer le déplacement, sur la surface imperméable ou semi-imperméable du carreau, des sels chromophores contenus dans le produit;
- séchage et cuisson du carreau.

2. Procédé selon la revendication 1, **caractérisé en ce que** la surface imperméable ou semi-imperméable est formée sur une couche de matériau vitrifiable.

3. Procédé selon la revendication 1 ou 2, **caractérisé en ce que** ladite base de carreau, sur laquelle ladite couche imperméable ou semi-imperméable est formée, est constituée d'un matériau non vitrifié.

4. Procédé selon n'importe laquelle des revendications précédentes, **caractérisé en ce qu'**après la phase de mouillage e avant la phase de séchage, de l'air est soufflé sur la surface supérieure de la base de carreau.

5. Procédé selon n'importe laquelle des revendications précédentes, **caractérisé en ce que** ledit produit comprend au moins partiellement un colorant liquide contenant au moins les substances suivantes mixées entre elles:
- au moins 5% en masse d'une solution aqueuse saturée d'au moins un sel, inorganique ou métal-organique, ayant une action chromophore;
- au moins 5% en masse d'une substance de type connu ayant une action mouillante;
- au moins 20% en masse, et jusqu'à 100%, d'un solvant liquide.

6. Procédé selon n'importe laquelle des revendications précédentes, **caractérisé en ce que** ledit produit comprenant des sels chromophores suspendus dans un solvant contient des poudres céramiques.
